# FASCICULE DE BREVET EUROPEEN

(11) **EP 1 152 659 B1**
(45) Date de publication et mention de la délivrance du brevet: **09.04.2003**
(21) Numéro de dépôt: 00901706.2
(22) Date de dépôt: 03.02.2000
(51) Int. Cl.: A01K 97/02

(54) **DISPOSITIF D'AMORCAGE POUR TOUS TYPES DE PECHE AVEC TOUS TYPES D'AMORCES, EN MER, LAC, ETANG, RIVIERE, DES BORDS OU DES BATEAUX**
GERÄTE ZUM KÖDERN FÜR JEDEN ANGELTYPEN UND MIT JEDER KÖDERART, AM MEER, AM SEE, AM FLUSS, AM UFER ODER VOM BOOT AUS
BAIT DEVICE FOR ALL TYPES OF FISHING WITH ALL TYPES OF BAITS, AT SEA, ON A POND OR LAKE, IN A RIVER, ON THE RIVER BANKS OR IN A BOAT

(30) Priorité: 18.02.1999 FR 9901951
(43) Date de publication de la demande: 14.11.2001
(73) Titulaire: Queval, Noel, 94700 Maisons Alfort (FR)
(72) Inventeur: Queval, Noel, 94700 Maisons Alfort (FR)
(74) Mandataire: Lepeudry-Gautherat, Thérèse
(86) Numéro de dépôt international: FR0000249
(87) Numéro de publication internationale: WO00048459

(56) Documents cités:
- AU-B- 581 537
- FR-A- 788 322
- FR-A- 2 456 472

## Description

La présente invention concerne un dispositif d'amorçage pour la pêche des bords ou des bateaux, en étang, lac, rivière, mer, avec des amorces liquides (arôme, parfum, etc.) ou des amorces solides (vers, graines, bouillettes, pain, etc.)

L'amorçage est habituellement réalisé :
Des bords
   a) à l'aide de farine mouillée et serrée en boules lancées à l'endroit de pêche
   b) ou bien en projetant des vers, chènevis, blé, maïs, bouillette à l'aide de frondes ou de lanceurs spécialisés.
Des bateaux
   L'amorçage est réalisé habituellement :
   a) en lançant les èches à la main
   b) en les descendant dans une bourriche mailles métalliques ou filets au bout d'une corde

On connaît également par le FR 788322 un appareil d'amorçage automatique à partir d'un bateau comportant une boîte d'alimentation, un dispositif de brassage des amorces, un dispositif d'insufflation d'air comprimé et un tuyau se raccordant à la boîte d'alimentation et à une boîte de distribution.

Ces façons d'opérer sont très approximatives et en éparpillant l'amorce cela disperse les poissons et augmente fortement le coût de la pêche.

Cette façon d'amorcer ne permet pas de choisir précisément l'endroit d'amorçage, ni de changer le type de l'amorce solide, liquide, ni de choisir un pourcentage de mélange, ni son débit.

le dispositif d'amorçage selon l'invention apporte des solutions à ces questions et permet de choisir :
a) le type d'amorce liquide, solide ou pourcentage de mélange
b) le débit d'amorçage et de le modifier en fonction du coût choisi
c) l'endroit précis d'amorçage

L'invention a donc pour objet principal un dispositif d'amorçage pour tous types de pêche et tous types d'amorce suivant les revendications 1 et 2.

D'autres caractéristiques de l'invention apparaîtront à la lecture de la description suivante en référence aux dessins annexés qui représentent :

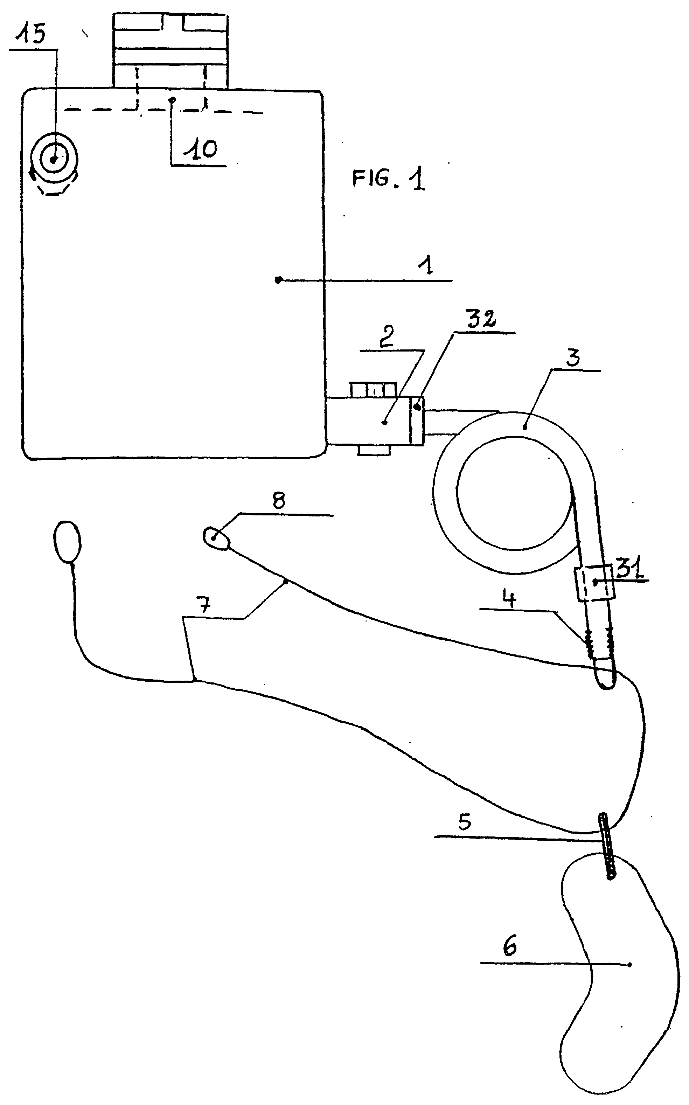

Figure 1 : une vue d'ensemble du dispositif de l'invention, version portable.
Figure 2 : le bouchon de l'orifice d'admission en détail, de ce dispositif.

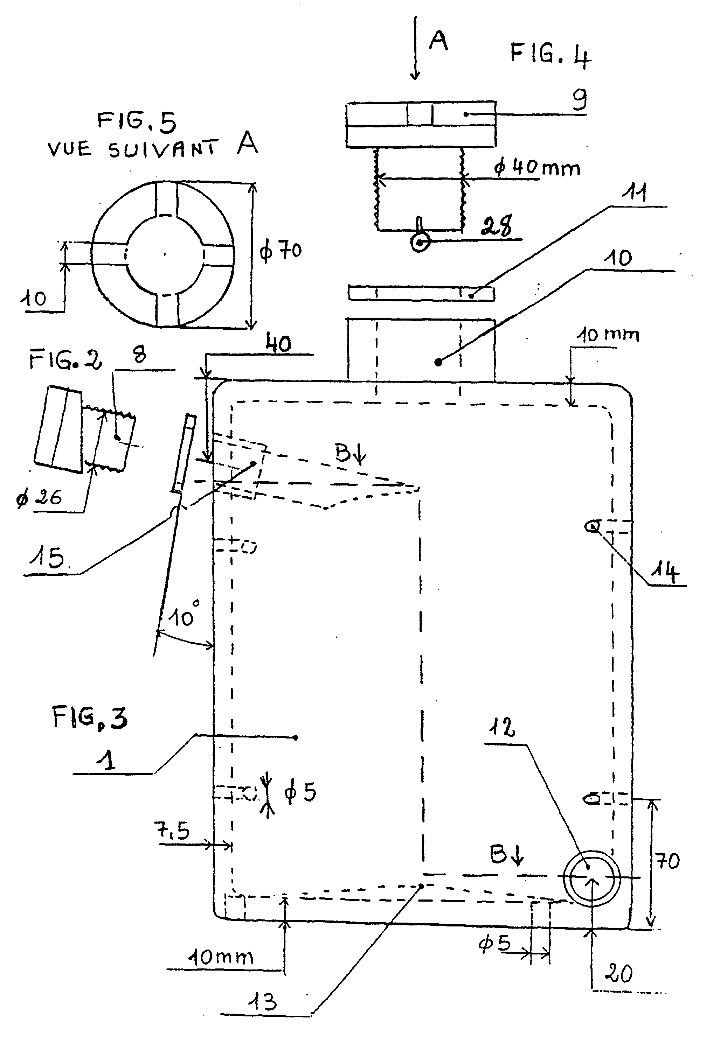

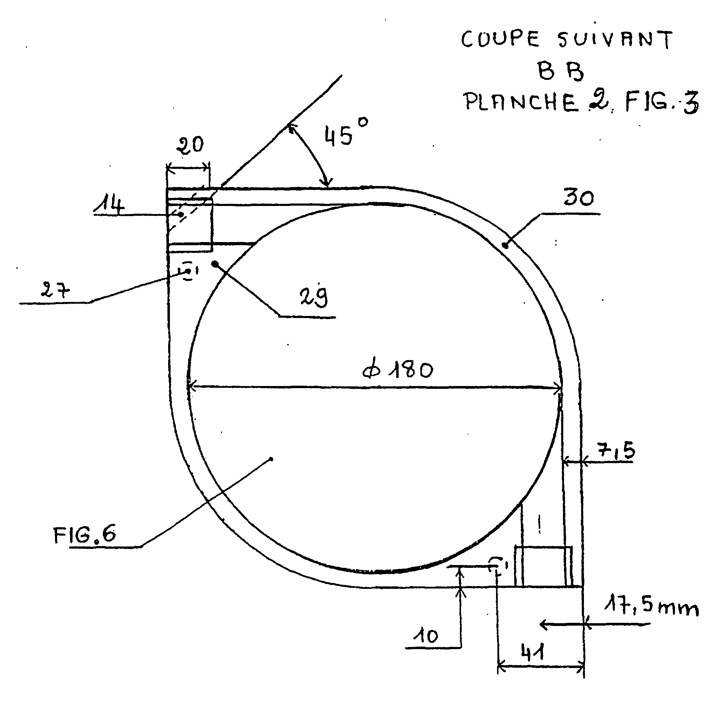

Figure 3 : le bloc réservoir en détail, de ce dispositif.

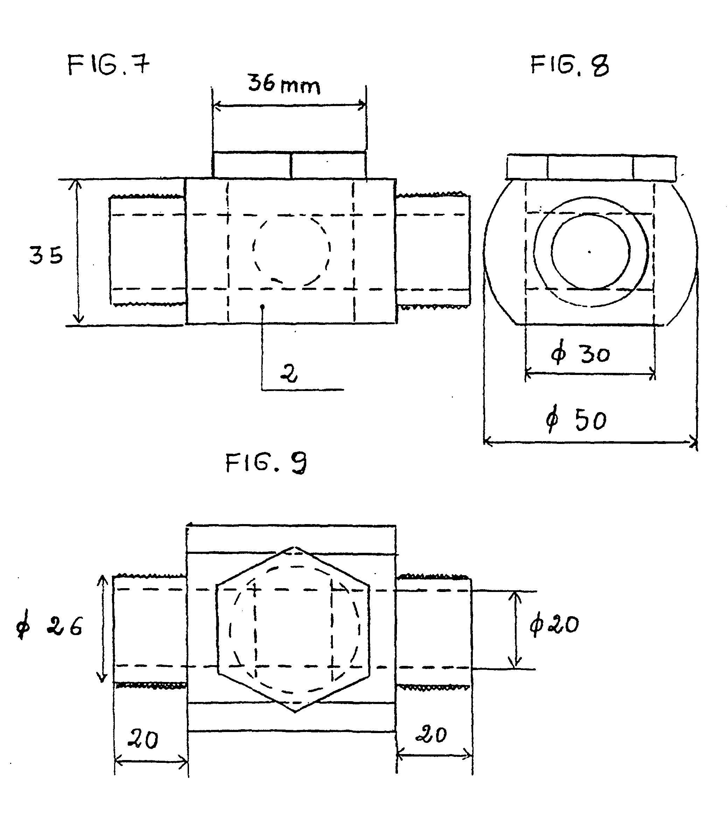

Figures 4 et 5 : le bouchon de l'orifice d'entrée de l'amorce brute en détail, de ce dispositif.
Figure 6 : une coupe du bloc réservoir, de ce dispositif.
Figures 7, 8 et 9 : le type de robinet en détail, de ce dispositif.

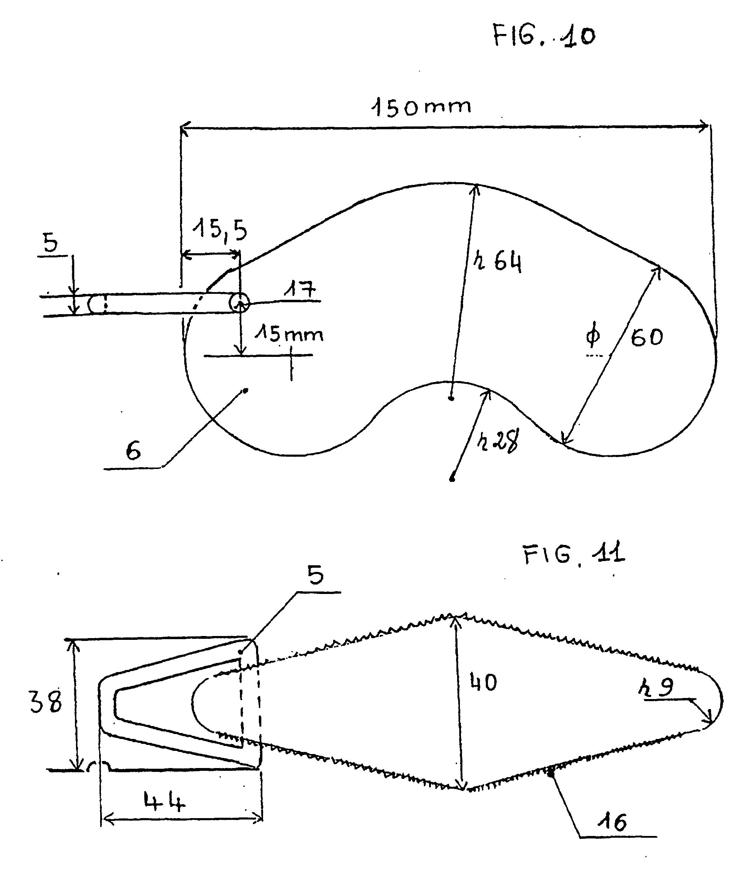

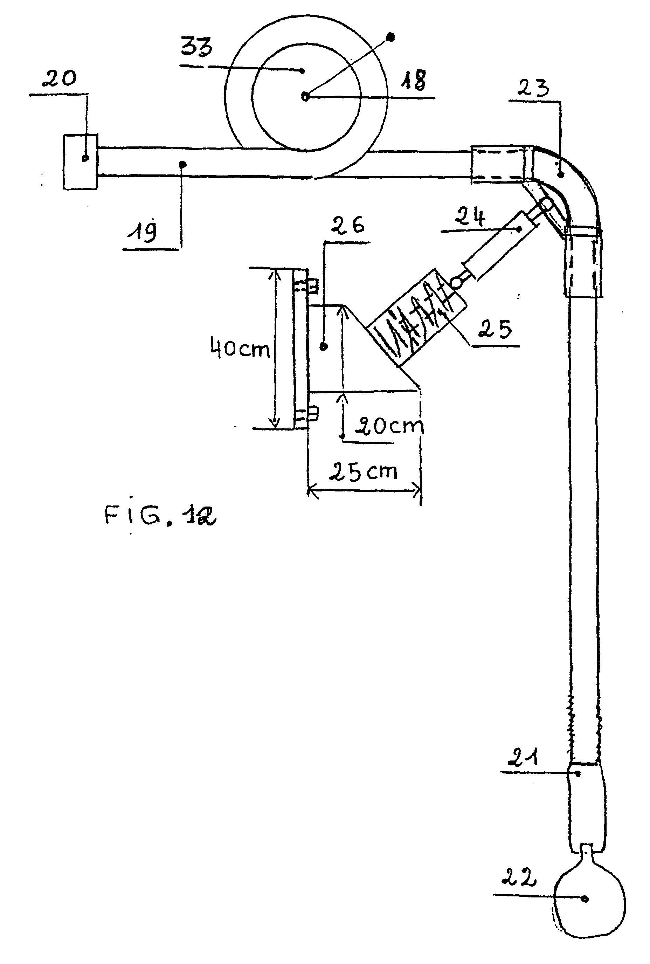

Figures 10 et 11 : le poids en détail, de ce dispositif.
Figure 12 : une vue d'ensemble du système de sortie d'amorces, version bateaux, de ce dispositif.

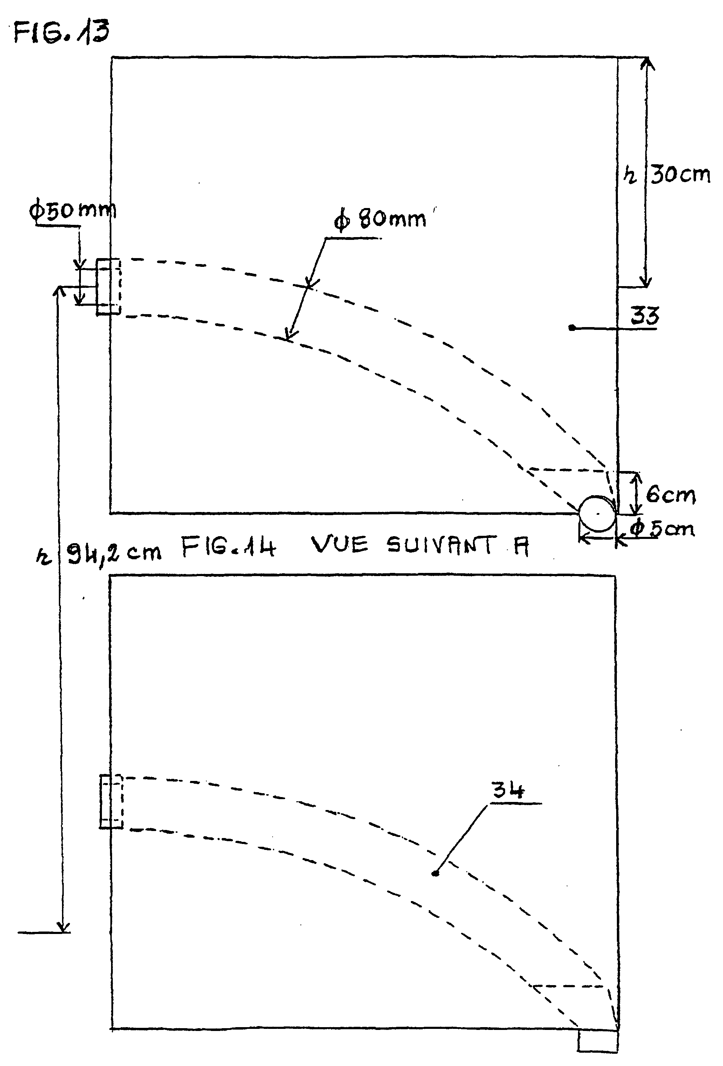

Figure 13 et 14 : le cylindre du dérouleur enrouleur de la version bateaux de ce dispositif.

D'une façon générale le dispositif comporte, en version portable, un réservoir de mélange eau amorce, présentant en haut un orifice d'admission d'eau muni d'un robinet, incliné vers le bas à 10° et tangent au diamètre intérieur.

Ce type d'admission impose au contenu une rotation circulaire vers le bas qui facilite le mélange d'amorce et l'entraîne vers la sortie.

Un orifice de sortie en bas tangent au fond et au diamètre intérieur muni d'un robinet.

Un orifice au centre sur le dessus percé au centre d'un col faisant saillie de 30 mm et d'un diamètre de 70 mm, permettant l'entrée de l'amorce brute, fermé par un bouchon vissé, muni d'un anneau servant à suspendre des sachets d'amorces solubles, cet orifice pourra être équipé d'un distributeur automatique d'amorce.

Le fond interne du réservoir étant bombé de 5 mm au centre, facilite la progression de l'amorce, vers les bords, donc vers la sortie.

La forme extérieure du réservoir vue du dessus comporte deux quarts de cercle concentriques au diamètre intérieur et opposés symétriques, ces quarts de cercle sont tangents à deux angles de 90° opposés symétriques. Les deux angles pleins rigidifient l'ensemble et permettent des perçages de diamètre important par ailleurs ils évitent que le réservoir dévale les pentes des bords de l'eau.

Le réservoir comporte également sur les faces externes (angle à 90°), 4 perçages prévus pour y fixer une sangle de transport.

Le fond externe du réservoir est percé de deux trous dans les angles (à 90°), afin d'y visser deux pointes d'ancrage sur le sol.

Un conduit d'amorçage fixé au robinet de sortie par une bague filetée se terminant par une attache métallique.

Une corde dont un bout est noué à l'attache métallique du conduit d'amorçage coulisse dans l'attache rapide d'un poids.

Le dispositif comporte également un poids 6 de 1,5 kg muni d'une attache rapide 5 dans laquelle coulisse la corde dont les deux bouts sont dans la main du pêcheur, et lancés (aisément jusqu'à 15 mètres) à l'endroit choisi. Un bout de la corde est noué à l'attache métallique du conduit d'amorçage fixé au robinet de sortie du réservoir avec une bague filetée. Il suffit alors de tirer sur l'autre bout de la corde en prenant appui sur le poids pour amener le conduit d'amorçage près du poids à l'endroit choisi.

La forme du poids haricot est de profil losange et son point d'attache désaxé (axe de fixation percé au diamètre de 5 mm, à 15,5 mm du bord gauche et désaxé vers le haut à 45 mm de la base), permettent lors de la récupération d'éviter les accrochages sur les fonds encombrés, car une seule traction sur la corde modifie les points de contact du poids ; les quatre faces 16 du losange rainurées au pas de 3 mm et de profondeur 2 mm, permettent au poids de se fixer sur les fonds.

En utilisant les deux robinets et l'orifice d'entrée d'amorce brute, il est aisé de choisir son pourcentage de mélange d'eau ainsi que le type d'amorce et sa quantité.

L'ouverture du robinet de sortie provoque l'écoulement du mélange, eau, amorce sous l'effet de la gravité ou de l'eau sous pression selon le choix.

Ainsi l'eau transporte l'amorce à l'endroit précis choisi pour la pêche.

Pour une version bateau le conduit d'amorçage beaucoup plus long est rangé sur un enrouleur dérouleur et coulisse dans un coude d'acier de descente entraîné par un poids sphérique, fixé à une attache métallique 21.

Le coude d'acier d'épaisseur 15 mm prolongé de deux bouts de 15 cm, est fixé à un axe d'acier bridé sur un gros ressort en acier, reposant vissé sur un socle solidaire du bateau, maintient fermement le conduit d'amorçage tout en absorbant les effets du tangage.

Le cylindre de l'enrouleur dérouleur a un diamètre de 60 cm sur 65 cm de long, il comporte en son centre un tuyau d'acier (34) de forme sinusoïdale de diamètre 8 cm conique sur 6 cm de long, abouchant sur la première sphère du conduit de 5 cm de diamètre, cette forme du tuyau d'acier permet des rayons de courbures supérieures à 14 cm ce qui autorise le passage d'amorces solides, ayant jusqu'à 15 cm de long sur 3 cm d'épaisseur, ex : sardines.

Selon le modèle choisi, portable ou de mer toute une gamme non illustrée sera déclinée
a) le réservoir de mélange d'amorçage peut varier de volume 6 1 à 200 litres
b) le conduit peut varier de diamètre 10 mm à 50 mm, longueur de 10 m à 500 mètres
c) le poids peut varier de forme haricot à sphérique, de 1,5 kg à 20 kg
d) un flotteur en liège pourra être fixé à l'extrémité du conduit de sortie pour un réglage vertical du point d'amorçage

En se référant plus précisément aux dessins on voit que le dispositif comporte donc les éléments suivants :

Un réservoir 1 en plastique présentant trois orifices
a) une admission de l'eau 15 de diamètre 20 mm inclinée de 10° vers le bas et tangente au diamètre intérieur, dont l'axe de départ est à 40 mm du haut du réservoir 1
   Cette admission d'eau est munie au choix d'un bouchon 8 ou d'un robinet 2. Les 25 premiers mm sont filetés au diamètre 26 mm pour recevoir un robinet 2 ou un premier bouchon 8. L'étanchéité est assurée par un joint en caoutchouc de 4 mm d'épaisseur.
b) un regard 10 pour insérer l'amorce brute, au centre du dessus du réservoir 1, de diamètre 40 mm percé dans l'axe central, d'un col de diamètre 70 dépassant le haut du réservoir de 30 mm. Ce regard pourra à la demande être muni d'un distributeur automatique d'amorce non représenté, ou d'un second bouchon 9 muni d'un petit anneau 28 permettant de suspendre des sachets à dissoudre dans le réservoir.
   L'étanchéité est assurée par un joint 11 en caoutchouc d'épaisseur 5 mm.
c) une sortie 12 de diamètre 20 mm tangent au diamètre intérieur du réservoir 1 dont l'axe est à 20 mm du bas du réservoir.

Les 25 premiers mm sont filetés au diamètre 26 mm pour recevoir le robinet 2.

Le fond 13 du réservoir 1 est bombé au centre de 5 mm.

Le réservoir 1 comporte également sur les faces externes, quatre perçages 14 de diamètre 5 mm à 45°, perpendiculaires à la base ; à 70 mm du bas et du haut du bloc réservoir.

Le fond externe du réservoir est percé de deux trous 27 dans les angles de 90°.

Un type de robinet 2 en plastique dont le diamètre intérieur est de 20 mm et comportant deux extrémités filetées au diamètre 26 mm sur 20 mm de long permettant d'y fixer, d'une part le robinet au réservoir 1, d'autre part le conduit 3.

Un conduit d'amorçage 3 en caoutchouc fixé à une extrémité par une bague filetée 32 diamètre 26 mm, à l'autre extrémité il est prolongé d'une attache métallique 4 tricotée dans son épaisseur sur 6 cm.

Des bagues de plomb 31 peuvent coulisser le long du conduit pour lester celui-ci.

Un poids 6 en fonte de 1,5 kg (version portable), de forme haricot et de profil de forme losange sert d'ancrage au conduit d'amorçage 3. Les différentes formes alliées à son point de traction excentré permettent lors de la récupération du poids, de modifier les points de contact du poids par une simple traction sèche de la corde 7 et ainsi de le libérer du fond.

Dans sa version bateau le dispositif comporte :

Un conduit d'amorçage 19 en caoutchouc mi-dur de 10 m à 500 mètres (dans l'exemple illustré, le diamètre est de 5 cm), est fixé à une extrémité par une bague 20 filetée, à un robinet de sortie d'un réservoir de 100 litres non représentés, à l'autre extrémité, il est terminé par une attache métallique tricotée dans son épaisseur sur 10 cm de long, à laquelle est fixé un poids de descente sphérique de 10 kg minimum.

Le conduit 19 est rangé sur un dérouleur enrouleur 18 entouré sur le cylindre 33.

Le conduit 19 coulisse dans un tube coudé 23 dont le diamètre intérieur est de 1 mm plus grand, que le diamètre extérieur du conduit.

Le coude 23 en acier de 15 mm d'épaisseur est prolongé à ses deux extrémités par deux bouts droits de 15 cm de long, le coude 23 porte le conduit 19, il est fixé à une extrémité à un axe en acier 24 de diamètre 5 cm et de 40 cm de long par une articulation de type bielle,

l'autre extrémité de l'axe fixée à un ressort d'acier 25 de diamètre 10 cm, lequel repose bridé sur un socle 26 fixé au bateau.

Le dispositif selon l'invention est particulièrement destiné à tous les types de pêches avec tous types d'amorces (solides, liquides), du bord ou d'un bateau :
en mer, lac, étang, rivière.

## Revendications

1. Dispositif d'amorçage pour tous types de pêche et tous types d'amorces **caractérisé en ce qu'**il comporte un réservoir (1) présentant trois orifices dont un orifice d'admission (15) d'eau sous pression, un regard d'entrée (10) de l'amorce brute, et un orifice de sortie (12) du mélange d'amorce et d'eau, deux robinets (2) aptes à être vissés respectivement dans l'orifice d'admission (15) et l'orifice de sortie (12) pouvant être munis d'un bouchon, un conduit (3) vissé à l'une de ses extrémités au robinet (2) lui-même vissé dans l'orifice de sortie (12), l'autre extrémité du conduit (3) étant munie d'une attache métallique (4) à laquelle est noué le bout d'une corde (7), la corde coulissant dans l'attache rapide (5) d'un poids (6).

2. Dispositif d'amorçage pour tous types de pêche et tous types d'amorces **caractérisé en ce qu'**il comporte un réservoir (1) présentant trois orifices dont un orifice d'admission (15) d'eau sous pression, un orifice d'entrée (10) de l'amorce brute, et un orifice de sortie (12) du mélange d'amorce et d'eau, deux robinets (2) aptes à être vissés respectivement dans l'orifice d'admission (15) et l'orifice de sortie (12) pouvant être munis d'un bouchon, un conduit (19) vissé à l'une de ses extrémités au robinet (2) lui-même vissé dans l'orifice de sortie (12), l'autre extrémité du conduit (19) étant munie d'une attache métallique (21) à laquelle est fixé un poids (22).

3. Dispositif d'amorçage selon la revendication 2 **caractérisé en ce qu'**il comporte un enrouleur dérouleur (18), un coude (23), un axe (24), un ressort (25), un socle (26), un poids (22).

4. Dispositif d'amorçage selon la revendication 1 **caractérisé en ce que** l'orifice d'admission (15) est incliné vers le bas de 10° d'une part, et d'autre part tangent au diamètre intérieur, **en ce que** le regard (10) peut être fermé par un bouchon (9) muni à sa base d'un anneau (28) et **en ce que** l'orifice de sortie (12) du mélange d'amorce et d'eau est tangent au fond et tangent au diamètre intérieur.

5. Dispositif d'amorçage selon les revendications 1 et 2 **caractérisé en ce que** le réservoir (1) comporte au centre, sur le dessus, un regard (10) de diamètre 70 mm et de 30 mm de haut, muni d'un perçage de diamètre 40 mm dans lequel est apte à être vissé le bouchon (9).

6. Dispositif d'amorçage selon la revendication 1 **caractérisé en ce** la forme extérieure du réservoir (1) vue de dessus, comporte deux quarts de cercle (30) concentriques au diamètre intérieur et opposés symétriques, tangents à deux coins (29) à 90° et opposés symétriques.

7. Dispositif d'amorçage selon la revendication 1 **caractérisé en ce que** le réservoir (1) comporte un fond bombé (13) de 5 mm.

8. Dispositif d'amorçage selon la revendication 1 **caractérisé en ce que** le poids (6) vu du dessus, a une forme de haricot, et vu de profil a une forme de losange dont les faces sont rainurées avec un pas de 3 mm et une profondeur de 2 mm.

9. Dispositif d'amorçage selon les revendications 1 et 8 **caractérisé en ce que** le poids (6) comporte un perçage (17) de diamètre 5 mm, à 15,5 mm du bord gauche, et désaxé vers le haut à 45 mm de la base.

10. Dispositif d'amorçage selon la revendication 3 **caractérisé en ce que** l'enrouleur (18) comporte un cylindre (33) de diamètre 60 cm sur 65 cm de long, comportant en son centre un tuyau d'acier (34) de forme sinusoïdale de diamètre 8 cm, conique sur 6 cm de long, abouchant le conduit (19) de diamètre 5 cm.

11. Dispositif d'amorçage selon la revendication 10, **caractérisé en ce que** la forme sinusoïdale du tuyau d'acier (34) permet des rayons de courbure supérieurs à 14 cm.

12. Dispositif d'amorçage selon la revendication 3, **caractérisé en ce que** l'ensemble : coude (23), axe (24), ressort (25), est apte à reposer sur un socle (26) fixé au bateau.

## Patentansprüche

1. Gerät zum Ködern für alle Arten des Angeins und alle Köder-Typen, **dadurch gekennzeichnet, dass** es einen Behälter (1) mit drei Öffnungen, einer Druckwasser-Einspeisungsöffnung (15), einer Einfüllöffnung (10) des rohen Köders und einer Austrittsöffnung (12) des Köder-Wasser-Gemisches umfasst, sowie zwei Hähne (2), die jeweils in die Einspeisungsöffnung (15) und die Austrittsöffnung (12) geschraubt werden können, die mit einem Stopfen versehen werden können, und eine Leitung (3), die mit einem ihrer Enden mit dem in die Austrittsöffnung (12) geschraubten Hahn (2) verschraubt ist, wobei das andere Ende der Leitung (3) mit einer metallischen Halterung (4) versehen ist, an der das Ende einer Schnur (7) festgebunden ist, die in dem Laschenelement (5) eines Gewichts (6) gleitet.

2. Gerät zum Ködem für alle Arten des Angeins und alle Köder-Typen, **dadurch gekennzeichnet, dass** es einen Behälter (1) mit drei Öffnungen, einer Druckwasser-Einspeisungsöffnung (15), einer Einfüllöffnung (10) des rohen Köders und einer Austrittsöffnung (12) des Köder-Wasser-Gemisches umfasst, sowie zwei Hähne (2), die jeweils in die Einspeisungsöffnung (15) und die Austrittsöffnung (12) geschraubt werden können, die mit einem Stopfen versehen werden können, und eine Leitung (19), die mit einem ihrer Enden an dem in die Ausgangsöffnung (12) geschraubten Hahn (2) festgeschraubt ist, wobei das andere Ende der Leitung (19) mit einer metallischen Halterung (21) versehen ist, an der ein Gewicht (22) befestigt ist.

3. Gerät zum Ködern nach Anspruch 2, **dadurch gekennzeichnet, dass** es eine Aufwickel-Abwickel-Vorrichtung (18), einen Krümmer (23), eine Achse (24), eine Feder (25), einen Sockel (26) und ein Gewicht (22) umfasst.

4. Gerät zum Ködern nach Anspruch 1, **dadurch gekennzeichnet, dass** die Einspeisungsöffnung (15) einerseits um 10° nach unten geneigt ist und andererseits den Innendurchmesser tangiert, und dadurch, dass die Einfüllöffnung (10) mit einem Stopfen (9) verschlossen werden kann, der an seiner Unterseite mit einem Ring (28) versehen ist, und dadurch, dass die Austrittsöffnung (12) der Mischung aus Wasser und Köder den Boden tangiert und den Innendurchmesser tangiert.

5. Gerät zum Ködern nach den Ansprüchen 1 und 2, **dadurch gekennzeichnet, dass** der Behälter (1) in der Mitte seiner Oberseite eine Einfüllöffnung (10) mit einem Durchmesser von 70 mm, einer Höhe von 30 mm und einer Bohrung mit einem Durchmesser von 40 mm umfasst, in die man den Stopfen (9) hineinschrauben kann.

6. Gerät zum Ködern nach Anspruch 1, **dadurch gekennzeichnet, dass** die Außenform des Behälters (1) von oben gesehen zwei zum Innendurchmesser konzentrische und entgegengesetzte, symmetrische Viertelkreise (30) umfasst, die zwei entgegensetzte symmetrische 90°-Ecken (29) tangieren.

7. Gerät zum Ködern nach Anspruch 1, **dadurch gekennzeichnet, dass** der Behälter (1) einen 5 mm nach oben gewölbten Boden (13) umfasst.

8. Gerät zum Ködern nach Anspruch 1, **dadurch gekennzeichnet, dass** das Gewicht (6) von oben gesehen die Form einer Bohne hat und im Profil gesehen die Form einer Raute, deren Seiten gezackt sind, mit einer Teilung von 3 mm und einer Zackentiefe von 2 mm.

9. Gerät zum Ködern nach den Ansprüchen 1 bis 8, **dadurch gekennzeichnet, dass** das Gewicht (6) eine Bohrung (17) mit einem Durchmesser von 5 mm umfasst, 15,5 mm vom linken Rand entfernt und bezüglich der Unterseite um 45 mm nach oben versetzt.

10. Gerät zum Ködern nach Anspruch 3, **dadurch gekennzeichnet, dass** die Wickelvorrichtung (18) einen Zylinder (33) mit einem Durchmesser von 60 cm und einer Länge von 65 cm umfasst, der in seinem Zentrum ein sinusförmiges Stahlrohr (34) enthält, mit einem Durchmesser von 8 cm, der sich an einem Ende über eine Länge von 6 cm konusförmig so verjüngt, dass die Leitung (19) mit einem Durchmesser von 5 cm abschließt.

11. Gerät zum Ködern nach Anspruch 10, **dadurch gekennzeichnet, dass** die Sinusform des Stahlrohrs (34) Krümmungsradien von mehr als 14 cm ermöglicht.

12. Gerät zum Ködem nach Anspruch 3, **dadurch gekennzeichnet, dass** es einen am Boot befestigten Sockel (26) umfasst, auf dem das System aus Krümmer (23), Achse (24) und Feder (25) ruht.

## Claims

1. Baiting apparatus for all types of fishing and all types of bait, **characterized in that** it comprises a reservoir (1) having three orifices namely an inlet orifice (15) for water under pressure, an inlet opening (10) for raw bait, and an outlet orifice (12) for the mixture of bait and water, two taps (2) which can be screwed one into the inlet orifice (15) and the other into the outlet orifice (12) and which can be fitted with a plug, a pipe (3) screwed at one of its ends onto the tap (2) screwed into the outlet orifice (12), the other end of the pipe (3) being fitted with a metal attachment (4) to which the end of a line (7) is tied, the line sliding through the quick-fit attachment (5) of a weight (6).

2. Baiting apparatus for all types of fishing and all types of bait, **characterized in that** it comprises a reservoir (1) having three orifices namely an inlet orifice (15) for water under pressure, an inlet orifice (10) for raw bait, and an outlet orifice (12) for the mixture of bait and water, two taps (2) which can be screwed one into the inlet orifice (15) and the other into the outlet orifice (12) and which can be fitted with a plug, a pipe (19) screwed at one of its ends onto the tap (2) screwed into the outlet orifice (12), the other end of the pipe (19) being fitted with a metal attachment (21) to which a weight (22) is fixed.

3. Baiting apparatus according to claim 2, **characterized in that** it comprises a winder/unwinder (18), an elbow (23), a pin (24), a spring (25), a mounting plate (26) and a weight (22).

4. Baiting apparatus according to claim 1, **characterized in that** the inlet orifice (15) is inclined downwards by 10° on the one hand, and on the other hand is tangential to the inside diameter, **in that** the opening (10) can be closed by a plug (9) equipped at its base with a ring (28) and **in that** the outlet orifice (12) for the mixture of bait and water is tangential to the bottom and tangential to the inside diameter.

5. Baiting apparatus according to claims 1 and 2, **characterized in that** the reservoir (1) comprises in the middle, on the top, an opening (10) with a diameter of 70 mm and 30 mm high, equipped with a hole 40 mm in diameter into which the plug (9) can be screwed.

6. Baiting apparatus according to claim 1, **characterized in that** the external shape of the reservoir (1) viewed from above comprises two quarter circles (30) which are concentric with the inside diameter and symmetrically opposed, tangential to two corners (29) at 90° and symmetrically opposed.

7. Baiting apparatus according to claim 1, **characterized in that** the reservoir (1) has a bottom (13) domed by 5 mm.

8. Baiting apparatus according to claim 1, **characterized in that** the weight (6), viewed from above, is kidney bean shaped, and viewed from the side is diamond shaped, its faces being grooved at a pitch of 3 mm and with a depth of 2 mm.

9. Baiting apparatus according to claims 1 and 8, **characterized in that** the weight (6) has a hole (17) 5 mm in diameter, 15.5 mm from the left-hand edge and off-centred upwards 45 mm away from the base.

10. Baiting apparatus according to claim 3, **characterized in that** the winder (18) comprises a cylinder (33) with a diameter of 60 cm and 65 cm long, comprising, at its centre, a steel pipe (34) of sinusoidal shape and diameter 8 cm, conical by 6 cm long, joining the pipe (19) of diameter 5 cm.

11. Baiting apparatus according to claim 10, **characterized in that** the sinusoidal shape of the steel pipe (34) allows radii of curvature in excess of 14 cm.

12. Baiting apparatus according to claim 3, **characterized in that** the assembly consisting of the elbow (23), the pin (24) and the spring (25) is able to rest on a mounting plate (26) fixed to a boat.
